Europäisches Patentamt

(19) European Patent Office

Office européen des brevets

(11) Publication number: **0 003 405**
**B1**

(12) **EUROPEAN PATENT SPECIFICATION**

(45) Date of publication of patent specification: **13.01.82**

(21) Application number: **79300074.6**

(22) Date of filing: **17.01.79**

(51) Int. Cl.³: **C 08 F 279/02,**
C 08 F 255/02
//(C08F279/02, 212/12),
(C08F255/02, 212/12)

(54) **High impact copolymers.**

(30) Priority: **19.01.78 US 870782**

(43) Date of publication of application:
**08.08.79 Bulletin 79/16**

(45) Publication of the grant of the European patent:
**13.01.82 Bulletin 82/2**

(84) Designated Contracting States:
**BE DE FR GB IT NL**

(56) References cited:
**CH - A - 440 712**
**FR - A - 1 330 747**
**FR - A - 2 211 482**
**FR - A - 2 281 380**
**US - A - 3 696 172**

(73) Proprietor: **MOBIL OIL CORPORATION**
**150 East 42nd Street**
**New York New York 10017 (US)**

(72) Inventor: **Schwab, Frederick Charles**
**34 Spear Street Metuchen**
**Middlesex County New Jersey (US)**

(74) Representative: **Jones, Alan John et al,**
**CARPMAELS & RANSFORD 43 Bloomsbury**
**Square**
**London, WC1A 2RA (GB)**

Courier Press, Leamington Spa, England.

# 0 003 405

## High Impact Copolymers

This invention relates to high impact polymers of styrenic monomers.

Styrene has been used for a long period of time in the manufacture of polymers and polystyrene has attained a large market for many purposes.

The nuclear alkyl substituted styrenes have also been used in various applications. The monomer which has been principally used is known as vinyltoluene. This is a mixture which consists mainly of meta- and para-methyl styrenes (vinyl toluenes) produced by the catalytic dehydrogenation of a mixture of the corresponding m- and p-ethyltoluenes. The ethyltoluene mixture is itself obtained by the fractional distillation of a mixture of the o-, m- and p- ethyltoluenes. The weight ratio of the m- and p-isomers in the monomer mixture is approximately 65:35 (m:p). A convenient summary of the preparation and properties of the monomer mixture and of polymers produced from it is given in "Styrene: Its Polymers, Copolymers and Derivatives" Ed. R. H. Boundy, R. F. Boyer, ACS Monograph Series, 1952, Hafner Publishing Company, Pages 1232 to 1245.

High impact copolymers are also known. These materials are generally prepared by a grafting technique in which styrene is polymerized in the presence of a rubbery backbone polymer. Techniques for preparing such polymers are well known and are described, for example, in U.S. 2694692 and GB 1054301.

French Patent Specification 2281380 discloses the production of impact resistant styrene copolymers by graft polymerization. Among the comonomers which may be used are nuclear-substituted alkylstyrenes as, for example, vinyl toluene, and styrenes substituted in the nucleus by an alkyl group.

We have now found that high impact copolymers having advantageous properties may be made from a polymerizable mixture comprising a mixture of isomeric methyl ethylbenzenes having a particular isomeric distribution.

The polymerizable mixture comprises an isomeric mixture consisting essentially of the m- and p-isomers of methyl ethenyl benzene. The isomer mixture is substantially devoid of the o-isomer; when the o-isomer is present, the amount of it is not more than 0.1% based on the total weight of the isomer mixture. The polymerizable mixture may consist essentially of said isomer mixture or may include other comonomers, e.g. acrylonitrile.

The weight ratio of the isomers in the isomer mixture is as follows:

| Isomer | Wt. Percent |
|---|---|
| 1-methyl-2-ethenyl benzene | Not more than 0.1 preferably not more than 0.05. |
| 1-methyl-3-ethenyl benzene | Not more than 10, preferably 1 to 5. |
| 1-methyl-4-ethenyl benzene | At least 90. |

Generally, the proportion of the p-isomer (1-methyl-4-ethenyl benzene) will be at least 95 weight percent with the m-isomer (1-methyl-3-ethenyl benzene) constituting not more than 5 weight percent of the isomer mixture. Particularly preferred isomer mixtures contain 97 to 99 weight percent of the p-isomer and 1 to 3 weight percent of the m-isomer.

The isomer mixture may contain impurities and adventitious materials in addition to the methyl ethenyl benzenes. Generally, these other materials will not constitute more than 1 percent by weight of the total mixture. These other materials derive essentially from the process used to make the methyl ethenyl benzenes.

A typical isomer mixture has the following analysis, by weight, determined by gas chromatography:

| | | Wt. percent |
|---|---|---|
| Total vinyl benzenes | | 99.41 |
| Residue: | | |
| Ethyl toluene | 0.10 | |
| Mesitylenes etc. | 0.15 | |
| Non-vinylic higher boilers | 0.34 | |
| | 0.59 | 0.59 |
| | | 100.00 |

| Vinyl benzenes: | |
|---|---|
| 1-methyl-2-ethenyl benzene | 0.05 |
| 1-methyl-3-ethenyl benzene | 2.6 |
| 1-methyl-4-ethenyl benzene | 97.4 |

2

The mixture of the isomeric methyl ethenyl benzenes may be obtained by the catalytic dehydrogenation of a mixture of the corresponding ethyl toluenes, which in turn may be obtained by the selective alkylation process disclosed in British Patent Specification No. 1,536,828.

The ethyl toluene precursor is produced by the alkylation of toluene with ethylene in the presence of certain crystalline aluminosilicate zeolite catalysts. The catalyst has a silica to alumina weight ratio of at least 12 and a constraint index within the range of 1 to 12. The process produces an extremely high proportion of the 1-methyl-4-ethyl benzene isomer, with only a minor proportion of the 1-methyl-3-ethyl benzene isomer and negligible amounts of the 1-methyl-2-ethyl benzene isomer. The almost complete absence of the 1-methyl-2-ethyl isomer is highly advantageous because this isomer tends to produce undesired by-products during the dehydrogenation step (indanes and indenes which adversely affect the properties of the resultant polymers and which cannot be easily separated from the methyl ethenyl benzenes).

The mixture of isomeric ethyl toluenes may be subjected to distillation prior to the dehydrogenation step in order to separate out various by-products and after the hydrogenation has been completed, a further distillation may be carried out to separate the methyl ethenyl benzenes from their saturated precursors,

Since the proportion of the 1-methyl-4-ethyl benzene in the mixture is so high, usually at least 95 by weight, the mixture can be regarded essentially as the para (1,4-) isomer. For convenience in this specification, therefore, the mixture may be referred to as "the para isomer monomer".

The high impact copolymers are graft copolymers produced by grafting units derived from a polymerizable mixture comprising the methyl ethenyl benzene monomer mixture onto a backbone polymer which is of a rubbery nature. Suitable rubbery backbone polymers include polybutadiene, poly(dimethyl butadiene), polyisoprene, polychloroprene and other synthetic rubbers such as the styrene-butadiene rubbers (SBR), ethylene-propylene rubbers (EPR), ethylene-propylene-diene elastomers, polyacrylates, nitrile rubbers and copolymers with other aromatic monomers including vinyl toluene. The backbone will generally comprise 2 to 25 percent by weight of the high-impact copolymer, preferably 3 to 10 percent by weight. Normal techniques, e.g. grafting, comparable to those used for making high impact polystyrenes are useful; they are well known in the art and referred to, for example, in U.S. Patent 2694692 and British Patent 1054301. Thus, the polymerization is preferably carried out by the bulk polymerization technique with the rubbery backbone polymer dissolved in the monomer mixture, although, if desired other techniques may be used e.g. bulk polymerization followed by emulsion polymerization or emulsion polymerization alone. A preferred technique consists in making an initial bulk polymerization with the backbone polymer dissolved in the monomer mixture. When the polymerization has proceeded partly, this mixture is dispersed in a suitable suspending medium e.g. water and the polymerization continued as an emulsion.

The normal types of polymerization catalyst may be used e.g. free radical initiators such as di-tertiary butyl peroxide, azobis (iso-butyronitrile), di-benzoyl peroxide, tertiary butyl perbenzoate, dicumyl peroxide or potassium persulfate. If an emulsion or suspension polymerization technique is used, stabilizers may be added to stabilize the system while the polymerization continues. These stabilizers are generally surfactants but other materials such as polyvinyl alcohols may be used also.

Molecular weight modifying agents may be added in the course of the polymerization in order to improve the properties of the final high impact copolymer. The mercaptans, particularly alkyl mercaptans are suitable molecular weight control agents. Dodecyl mercaptan is preferred. The mercaptans are preferably used in an amount from 0.005 to 0.5%, generally 0.05 to 0.25%, by weight, as is conventional.

The high impact copolymers derived from ethylene-propylene-diene elastomers are particularly advantageous in their high temperature stability and weatherability. The copolymers produced from polyisoprene have exceptionally high impact strengths as shown by their Izod impacts. Furthermore, the high impact copolymers according to the present invention are more translucent in thin sections than similar high impact polystyrenes. This is probably because the refractive index of the present polymers is closer to that of the backbone polymers than that of polystyrene. A typical comparison of properties is given in Table 1 below. The samples were high impact materials containing 4.89 phm (parts per hundred parts by weight of monomer) of *cis*-polybutadiene.

## 0 003 405

### Table 1
### High Impact Materials

| | Styrene | Methyl Ethenyl Benzene |
|---|---|---|
| Tensile Modulus, psi (GPa) | 241,000 (1.662) | 255,000 (1.758) |
| Yield Strength, psi (kPa) | 3,500 (24,132) | — |
| Break Strength, psi (kPa) | 3,320 (22,891) | 3,710 (25,580) |
| Elongation, % | 14 | 7.1 |
| Izod Impact, Ft-lbs/in (J/cm) | 1.3 (0.69) | 2.10 (1.12) |
| Vicat Softening, °C | 100.5 | 108 |
| % Transmission | 77.0 | 83.8 |
| Density | 1.04 | 1.01 |

During the polymerization, the methyl ethenyl benzene isomer mixture may be grafted onto the backbone polymer by itself or with other co-monomers e.g. acrylonitrile. If such other monomers are used they are preferably used in proportions of less than 50% by weight for economic reasons. However, their use does enable the properties of the final polymer to be varied and if desired, the amount of comonomer may be increased above 50% by weight.

The invention is illustrated in the following Examples. In the Examples, percentages and ratios are by weight.

Example 1

Preparation of a high impact polymer with an ethylene-propylene-diene elastomer (EPDM).

The methyl ethenyl benzene isomer mixture used had the following composition (weight percent):

| | |
|---|---|
| Methyl ethenyl benzenes | 99.43 |
| Ethyltoluene | 0.53 |
| Xylenes, cumenes, mesitylenes | 0.01 |
| High boiling materials | 0.03 |
| | |
| Methyl ethenyl benzenes: | |
| 1-methyl-2-ethenyl benzene | —(1) |
| 1-methyl-3-ethenyl benzene | 3.0 |
| 1-methyl-4-ethenyl benzene | 97.0 |

Note: (1) Less than 0.05%.

A quantity of 220 g of this isomer mixture, 1.1 g mineral oil ("Nujol"-trademark) and 11.0 g EPDM ("Royalene 515"-trademark) (EPDM) were added to a 1-liter reactor equipped with a stirrer and allowed to dissolve. A quantity of 0.071 g of azobisisobutyronitrile was added and the temperature raised to 90°C and the stirring speed to 350 rpm. After heating for 2 hours at 90°C, 0.108 g of benzoyl peroxide was added and the stirring increased to 450 rpm. After 3-1/2 hours heating at 90°C, 0.07 ml t-dodecylmercaptan, 0.135 g t-butyl-perbenzoate and 1.582 g t-butylperoctoate were added. After a few minutes mixing, an aqueous solution at 90°C, consisting of 320 ml distilled water, 0.59 g "Gelvatol 20—90" (surfactant-trademark) and 1.35 g sodium chloride, was added and the stirring speed was increased to 550 rpm, the temperature was raised to 94°C and held for 16 hours. The temperature was then raised to 96°C and held for an additional 24 hours.

After the polymerization, the product was collected as small beads, dried and tested.

Test results were as follows: Izod Impact—1.14 ft-lb/in (0 61J/cm), Tensile Modulus—239,000 psi (1.648GPa), Break Strength—3970 psi (27,372 kPa), Melt Index—3.40 g/10 minutes. Vicat Softening temperature—104°C, Transmission—60.8%.

Example 2

Preparation of a high impact copolymer with polyisoprene.

A quantity of 220 g of the isomer mixture of Example 1, 1.1 g mineral oil ("Nujol") and 11.0 g polyisoprene ("Ameripol 600"-trademark) were added to a 1 liter reactor equipped with stirring and allowed to dissolve. A quantity of 0.071 g of azobisisobutyronitrile was added and the temperature was raised to 90°C and the reaction was stirred at 350 rpm. After 2 hours heating at 90°C, 0.108 g of benzoyl peroxide was added at 90°C and the stirring increased to 450 rpm. After 3 hr 30 min at 90°C, 0.07 ml of t-dodecylmercaptan, 0.124 g t-butylperbenzoate and 1.582 g of t-butylperoctoate were added. After a few minutes mixing, an aqueous solution at 90°C consisting of 320 ml distilled water, 0.59 g. polyvinyl alcohol ("Gelvatol 20—90") and 1.35 g. sodium chloride was added to the prepolymer. The stirring speed was raised to 550 rpm, and the temperature increased to 94°C and the reaction allowed to proceed overnight. The following day, the temperature was raised to 96°C and allowed to proceed for an additional 24 hours.

4

After the polymerization, the product was collected as small beads, dried and tested.

The test results were as follows: Izod Impact—1.90 ft-lb/in (1.01J/cm), Tensile Modulus—241,000 (1.662GPa), Break Strength—3260 (22,477kPa), Vicat Softening 100°C, Melt Index—3.83 g/10 min. Transmission—81.7%.

Example 3

Preparation of a high impact copolymer with nitrile rubber.

A quantity of 200 g of the mixture of Example 1, 1.1 g ("Nujol"), and 11.0 g nitrile rubber ("Paracril 3300"—trademark) was added to a 1-liter reactor equipped with stirring and allowed to dissolve. A quantity of 0.071 g of azo-bisisobutyronitrile was added and the temperature was raised to 90°C and the stirring speed to 350 rpm. After 2 hours heating at 90°C and 350 rpm, 0.108 g of benzoyl peroxide was added and the reaction allowed to continue. After 3 hours 30 min at 90°C, 0.07 ml, of t-dodecylmercaptan, 0.135 gm. t-butylperbenzoate and 1.582 gm. t-butyl peroctoate were added. After a few minutes mixing, an aqueous solution at 90°C consisting of 320 ml distilled water, 0.59 grams polyvinylalcohol ("Gelvatol 20—90") and 1.35 g sodium chloride was added to the prepolymer and the stirring speed was increased to 550 rpm and the temperature increased to 94°C. The reaction was allowed to proceed for 16 hours at 94°C and the temperature was raised to 96°C for an additional 24 hours.

After the polymerization, the product was collected as small beads, dried and tested.

Test results were as follows: Izod Impact—0.79 ft-lb/in (0.42J/cm), Tensile Modulus—288,000 (1.986GPa), Break Strength—5220 psi (35,991kPa), Melt Index=2.45 g/10 min, Transmission=83.4%, Vicat and Softening Point—106°C.

Example 4

Preparation of a high impact copolymer with polybutadiene.

A quantity of 226 g of the mixture of Example 1, 1.1 g mineral oil ("Nujol") and 11.0 g of polybutadiene ("Taktene 1202"—trademark) were added to a 1 liter reactor and allowed to dissolve. A quantity of 0.071 g of azobisisobutyronitrile was added and the temperature raised to 90°C. Stirring speed was set at 300 rpm. After 2 hours at 90°C and 300 rpm, 0.108 g of benzoyl peroxide was added and the reaction was continued at 90°C and 300 rpm. 4 hours 25 min after the start, 0.05 ml of t-dodecylmercaptan, 0.150 g t-butylperoctoate, and 0.135 g of t-butylperbenzoate were added at 90°C, 300 rpm. After a few minutes of mixing, a water solution (320 ml) containing 0.59 g of polyvinyl alcohol ("Gelvatol 20—390") and 1.35 g of sodium chloride was added at 90°C to the polymer mix. The stirring speed was increased to 600 rpm and the temperature raised to 94°C. The suspended polymer was allowed to react for 16 additional hours at 94°C.

The final product was recovered in the form of small beads which were subsequently molded and tested.

The test results were as follows: Izod Impact—2.10 ft-lb/in (1.12J/cm), Tensile Modulus 255,000 psi (1,758 GPa), Break Strength—3710 psi (25,580kPa), Melt Index—1.10 g/10 min, Vicat Softening Temp.—108°C, density=1.01 g/cc, and transmission=83.8%.

This copolymer is notable for its high softening temperature, low density and high transparency.

Example 5

Preparation of a high impact copolymer from acrylonitrile/butadiene/methyl ethenyl benzene.

Into a clean, dry, nitrogen-purged, three liter, four neck, round bottom flask was charged 272.7 g of polybutadiene latex ("Polysar PL-662"—trademark) (55% polybutadiene). The flask was fitted with a stirrer, thermometer, reflux condenser and 1000 ml addition funnel. A solution was prepared by mixing 12.0 g sodium stearate, 0.9 g sodium bicarbonate, 1.5 g sodium hydroxide, 3.0 g potassium persulfate and 1322 g deionized water. The mixture was heated to 60°C while stirring until a clear, homogeneous solution was obtained. This solution was then charged into the reaction flask to dilute the stirred polybutadiene latex. A solution containing 435.6 g of the mixture of Example 1, 164.4 g acrylonitrile and 2.7 g tert-dodecyl mercaptan was prepared and placed in the addition funnel. With stirring and the charge temperature controlled at 60°C, monomer addition was started and maintained at 0.5%/min. After all the monomer had been added, polymerization was allowed to proceed for one additional hour. The latex was sampled to determine conversion by measuring total solids content. Antioxidant was added to the latex in the form of 42 g of an 18% emulsion containing 2/1—TNPP/Irganox 1076 (trademark).

The final copolymer was recovered by pouring the hot, filtered latex into four volumes of rapidly stirred, 1.5% aqueous CaCl$_2$ solution at 100°C. The crumb was filtered and hot water washed. The crumb was vacuum-dried for 40 hours at 85°C with a slow nitrogen sweep through the oven.

Conversion was over 95%. Precoagulum present in the latex was less than one percent, based on total resin. The yield of resin was about 740 g. Injection molded samples, prepared by direct mold of the dried resin crumb, had notched Izod Impact Strength of 6.3 ft. lb/in (3.36J/cm).

The product is suitable for extrusion or injection molding to form hard, tough, impact-resistant articles such as drain pipe or appliance housings.

Example 6

A number of high impact copolymers were prepared by the method described in Example 2. These copolymers were made using styrene, vinyl toluene and a methyl ethenyl benzene mixture as the graft comonomers. The vinyl toluene was a commercial material containing meta-methyl styrene and para-methyl styrene in a ratio of about 65:35. The methyl ethenyl benzene isomer mixture contained about 97% by weight of para-methyl styrene and less than 0.1% by weight ortho-methyl styrene, with the balance being essentially the meta-isomer.

Compression molded samples of the impact copolymers produced were then tested. The results are shown below in Table 2 with the results of a commercial impact polystyrene given for comparison.

Our copending Application No. 79300076.1 (0003639) describes and claims a polymer produced by the polymerization of a polymerizable mixture of isomers of methyl ethenyl benzene consisting essentially of not more than 10% by weight of 1-methyl-3-ethenyl benzene, at least 90% by weight of 1-methyl-4-ethenyl benzene, and 0 to 0.1% by weight of 1-methyl-2-ethenyl benzene.

Table 2

| Monomer | Styrene | PMS | VT | Comm. HI-PS |
|---|---|---|---|---|
| Tensile modulus, psi (GPa) | 241,000(1.662) | 255,000(1.758) | 132,000*(0.910) | 213,000(1.469) |
| Yield strength, psi (kPa) | 3,500(24,132) | — | 2,250(15,513) | 3,110(21,443) |
| Break strength, psi (kPa) | 3,320(22,891) | 3,710(25,580) | 1,960*(13,514) | 2,860(19,719) |
| Break elongation, % | 14 | 7 | 4.5 | 40 |
| Melt Index (g) | 3.0 | 2.6 | 2.4 | 2.8 |
| Vicat Softening, °C, 1820 kPa) | 100.5 | 108 | 89 | 103 |
| Heat Dist. Temp. (264 psi, 1820 kPa)°C | 91.5 | 85 | 74 | 87 |
| Izod Impact, FPPI (J/cm) | 1.3(0.69) | 1.3(0.69) | 1.2(0.64) | 1.6(0.85) |
| Hardness, HR-R** | '109.5 | 108 | 108 | 91 |
| Density g./cc. | 1.04 | 1.01 | — | — |

Note: *These values probably too low.
    **Hardness, Rockwell—R

# 0 003 405

## Claims

1. A high impact copolymer comprising a rubbery backbone polymer chain and polymeric units derived from a mixture of isomers of methyl ethenyl benzene grafted on to the backbone polymer chain, characterized in that the polymeric units are derived from a polymerizable mixture comprising a mixture of isomers of methyl ethenyl benzene consisting essentially of not more than 10 percent by weight of 1-methyl-3-ethenyl benzene, at least 90 percent by weight of 1-methyl-4-ethenyl benzene, and 0 to 0.1 percent by weight of 1-methyl-2-ethenyl benzene.

2. The copolymer of claim 1 characterized in that the isomers are present in the isomer mixture in the following proportions by weight:
1-methyl-2-ethenyl benzene 0 to 0.05%.
1-methyl-3-ethenyl benzene 1 to 5%.
1-methyl-4-ethenyl benzene at least 95%.

3. The copolymer of claim 2 characterized in that the isomers are present in the isomer mixture in the following proportions by weight:
1-methyl-2-ethenyl benzene 0 to 0.05%.
1-methyl-3-ethenyl benzene 1 to 3%.
1-methyl-4-ethenyl benzene at least 97%.

4. The copolymer of any of Claims 1 to 3 characterized in that the rubbery backbone polymer chain is polybutadiene, a styrene-butadiene rubber, an ethylene-propylene rubber, an ethylene-propylene-diene elastomer, or a nitrile rubber.

5. The copolymer of any of claims 1 to 4 characterized in that the rubbery backbone polymer comprises 3 to 10 percent by weight of the total copolymer.

## Patentansprüche

1. Hochschlagfeste Copolymere aus einer kautschukartigen Gerüstpolymerenkette und polymeren Einheiten, die von einem Gemisch aus Isomeren von Methyläthenylbenzol, aufgepfropft auf die Gerüstpolymerenkette, abgeleitet sind, dadurch gekennzeichnet, daß die polymeren Einheiten von einem polymerisierbaren Gemisch abgeleitet sind, das ein Gemisch aus Isomeren von Methyläthenylbenzol enthält, welches im wesentlichen aus nicht mehr als 10 Gew.-% 1-Methyl-3-äthenylbenzol, wenigstens 90 Gew.-% 1-Methyl-4-äthenylbenzol und 0 bis 0,1 Gew-% 1-Methyl-2-äthenylbenzol besteht.

2. Copolymere nach Anspruch 1, dadurch gekennzeichnet, daß die Isomeren in dem Isomerengemisch in den folgenden Gewichtsanteilen enthalten sind:
1-Methyl-2-äthenylbenzol: 0 bis 0,05%
1-Methyl-3-äthenylbenzol: 1 bis 5%
1-Methyl-4-äthenylbenzol: wenigstens 95%.

3. Copolymere nach Anspruch 2, dadurch gekennzeichnet, daß die Isomeren in dem Isomerengemisch in den folgenden Gewichtsanteilen enthalten sind:
1-Methyl-2-äthenylbenzol: 0 bis 0,05%
1-Methyl-3-äthenylbenzol: 1 bis 3%
1-Methyl-4-äthenylbenzol: wenigstens 97%

4. Copolymere nach den Ansprüchen 1 bis 3, dadurch gekennzeichnet, daß die kautschukartige Gerüstpolymerenkette aus Polybutadien, einem Styrol/Butadien-Kautschuk, einem Äthylen/Propylen-Kautschuk, einem Äthylem/Propylen/Dien-Elastomeren oder einem Nitril-Kautschuk besteht.

5. Copolymere nach den Ansprüchen 1 bis 4, dadurch gekennzeichnet, daß das kautschukartige Gerüstopolymere 3 bis 10 Gew.-% des Gesamtcopolymeren unfaßt.

## Revendications

1. Copolymère de grande résistance au choc comprenant une chaîne de polymère de squelette caoutchouteux et des unités polymères dérivées d'un mélange d'isomères de méthyl éthényl benzène greffées sur la chaîne de polymère de squelette, caractérisé en ce que les unités polymères sont dérivées d'un mélange polymérisable comprenant un mélange d-isomères de méthyl éthényl benzène essentiellement constitué d'au maximum 10% en poids de 1-méthyl-3-éthényl benzène, au moins 90% en poids de 1-méthyl-4-éthényl benzène, et 0 à 0,1% en poids de 1-méthyl-2-éthényl benzène.

2. Copolymère selon la revendication 1, caractérisé en ce que les isomères sont présents dans le mélange d'isomères dans les proportions suivantes en poids:
1-méthyl-2-éthényl benzène: 0 à 0,05%
1-méthyl-3-éthényl benzène: 1 à 5%,
1-méthyl-4-éthényl benzéne: au moins 95%.

3. Copolymère selon la revendication 2, caractérisé en ce que les isomères sont présents dans le mélange d'isomères dans les proportions suivantes en poids:
1-méthyl-2-éthényl benzène: 0 à 0,05%,
1-méthyl-3-éthényl benzène: 1 à 3%,

**0 003 405**

3. Copolymère selon la revendication 2, caractérisé en ce que les isomères sont présents dans le mélange d'isomères dans les proportions suivantes en poids:

1-méthyl-2-éthényl benzène: 0 à 0,05%,

1-méthyl-3-éthényl benzène: 1 à 3%,

1-méthyl-4-éthényl benzène: au moins 97%.

4. Copolymère selon l'une quelconque des revendications 1 à 3, caractérisé en ce que la chaîne de polymère de squelette caoutchouteux est un polybutadiène, un caoutchouc de styrène-butadiène, un caoutchouc d'éthylène-propylène, un élastomère d'éthylène-propylène-diène ou un caoutchouc de nitrile.

5. Copolymère selon l'une quelconque des revendications 1 à 4, caractérisé en ce que le polyère de squelette caoutchouteux constitue 3 à 10% en poids du copolymère total.